# EUROPEAN PATENT APPLICATION

(11) **EP 2 073 428 A1**
(43) Date of publication of application: **24.06.2009**
(21) Application number: 07301703.0
(22) Date of filing: 19.12.2007
(51) Int. Cl.: H04L 5/02, H04L 27/26, H04L 12/56

(54) **Method for performing resource allocation in a radio communication system**

(71) Applicant: Alcatel Lucent, 75008 Paris (FR)
(72) Inventor: Bauer, Martin, 70191, Stuttgart (DE); Cesar, Bozo, 70439, Stuttgart (SK)
(74) Representative: Wetzel, Emmanuelle

(57) **Abstract**

The present invention relates to a method for allocating resources in a radio communication system comprising a plurality of subchannels in the frequency domain, said radio communication system supporting the transmission of frames on an air interface, said frames comprising a plurality of bursts, said frames having an extension in the frequency domain and an extension in the time domain.

According to the present invention, the method comprises the steps of:
- detecting a frequency range having a transmission quality below a predefined threshold, herein called low quality frequency range;
- allocating bursts in said frame;
- generating a dummy burst allocation not destined to any mobile subscriber station, the size and position of said dummy burst depending on the size and position of said low quality frequency range.

## Description

### BACKGROUND OF THE INVENTION

The present invention relates to a method for performing resource allocation in a mobile/wireless radio communication network.

In radio communication systems, resource allocation is a task which should be performed by taking especially the channel quality into account to ensure the efficiency of the transmission.

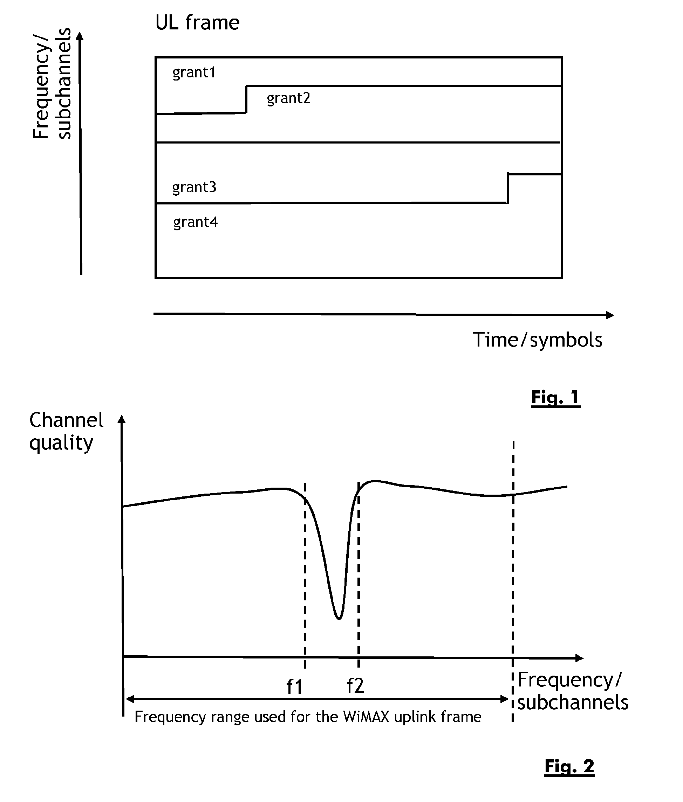

In radio communication networks as defined in IEEE 802.16e standard or evolution or WIMAX forum, the resource allocation is performed in the frequency as well as in the time domain. For this purpose, an OFDMA frame extends in the frequency domain over a predefined range of subchannels and in the time domain over a predefined number of symbols. Usually, the resource allocation, as defined in the standard, foresees that in the uplink the resource allocation is defined in the UL-MAP messages which contains the resource grants for the different mobile subscriber stations. Usually the first grant always starts at the first subchannel of the frame and extends over a certain number of symbols so that at the end the first grants ends at the X. th subchannel and at the Y. th symbol of the frame. The next grant directly follows the previous grant without a gap. All grants are located at adjacent symbols and adjacent subchannels Such a resource allocation mechanism is described in figure 1.

A problem of this mechanism is that in case some subchannels are received with a bad channel quality at one or more mobile subscriber stations and especially at the one for which a grant has been scheduled by the resource allocation method on the bad channel quality subchannel the transmission from/to this mobile subscriber station will be with high probability bad received at the receiver and a retransmission will need to take place which affects the efficiency of the radio communication network.

A particular object of the present invention is to provide for a resource allocation method in a multicarrier radio communication network preferably working in OFDMA (Orthogonal Frequency Division Multiple Access) mode which mitigates the drawbacks mentioned above in particular which is less sensitive to subchannels experiencing bad channel quality.

Another object of the invention is to provide corresponding scheduler and base station implementing the resource allocation method.

### SUMMARY OF THE INVENTION

These objects, and others that appear below, are achieved by a method for allocating resources in a radio communication system comprising a plurality of subchannels in the frequency domain according to claim 1, a scheduler according to claim 6 and a base station according to claim 7.

According to the present invention, in order to avoid the bad transmission quality over specific subchannels, the method allocates a dummy burst extending over subchannels experiencing bad transmission quality. This dummy burst is not foreseen to be allocated to a mobile subscriber station currently active in the network.

The method according to the present invention presents the advantage to keep the principle of contiguous burst allocation over the time/frequency domain as shown in figure 1 while, skipping the allocation of subchannels with bad channel quality by allocating them to none of the mobile subscriber stations currently active in the network.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows an uplink part of an OFDMA frame comprising burst according to prior art;
- Figure 2 shows an example of channel quality over a frequency range;
- Figure 3 shows a resource allocation scheme according to the present invention
- Figure 4 shows an embodiment of a scheduler according to the present invention
- Figure 5 shows an embodiment of a base station according to the present invention.

### DETAILED DESCRIPTION OF THE INVENTION

Following detailed description will be made using an OFDMA (Orthogonal Frequency Division Multiple Access) based radio communication system. It will nevertheless be clear for a person skilled in the art that the present invention applies to any radio communication networks in which the frame used have both a frequency and time extension.

Moreover, the present description will be made for the uplink direction of a radio communication network. It will nevertheless be clear for a person skilled in the art that the same would apply in the downlink direction of a radio communication network.

Figure 1 shows a prior art arrangement of the bursts constituting the uplink part of an OFDMA frame. This embodiment is illustrated using a multi channel communication network using OFDMA as technology on each of the sub-channels. In this context, a frame comprises bursts which themselves are constituted of OFDM symbols sent on the different sub-channels.

A frame FR to be transferred in an TDD OFDMA radio communication network is comprising a preamble preferably with pilot tones non represented on figure 1 followed by a transmission zone for the downlink and a transmission zone for the uplink. The uplink part comprises a plurality of bursts: grant #1, ..., grant #4. Each burst comprises information related to one end user.

It will also understood by those skilled in the art that the method according to the present invention presented later can be used as well for TDD as for FDD working radio communication network.

In this prior art solution, the bursts are put in the frame as they are scheduled from a prior art resource allocation module without further processing. The first burst starts at the first subchannel and at the first symbol of the OFDMA frame. Each additional burst follows immediately the previous burst so that each burst starts at a specific subchannel and a specific symbol of the OFDMA frame depending on the length of the previous bursts.

Consequently, it often happens that a burst is scheduled on subchannels which experience bad channel conditions as shown for example on figure 2. In this figure, showing the whole frequency extension of the uplink frame on the x axis, and the corresponding channel quality on the y axis, we can observe that the channel quality between frequencies f1 and f2 is so poor that a correct transmission of data on subchannels between these two frequencies is almost impossible. This corresponds in figure 1 to a large part of the frequency extension of grant #2 and grant #3.

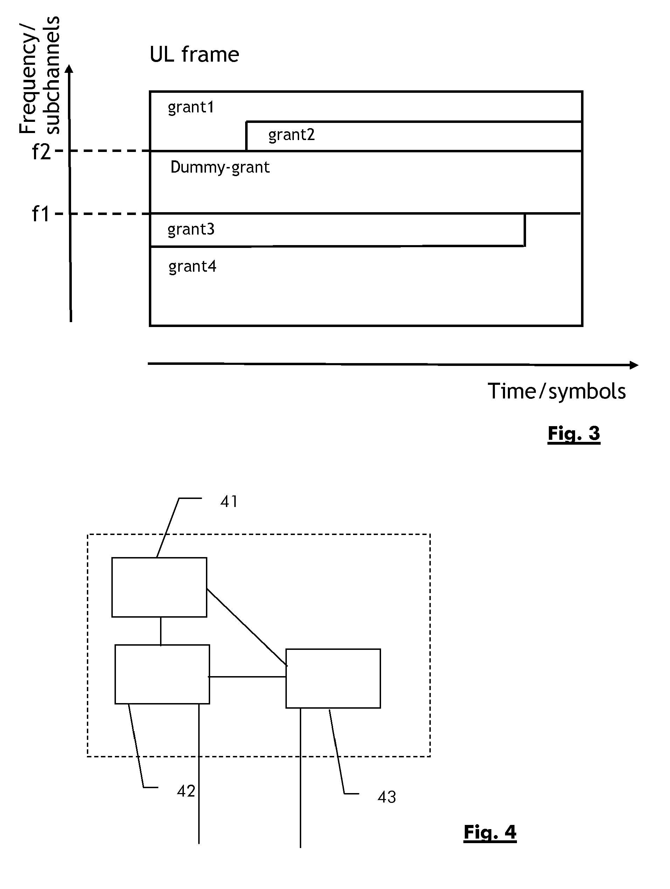

Figure 3 shows a resource allocation scheme according to the present invention. A frame FR to be transferred in an OFDMA radio communication network is comprising by a transmission zone for the uplink direction. The uplink part comprises a plurality of bursts: grant #1, grant #2, a dummy grant, grant 3 and grant #4. Each burst except the dummy grant comprises information related to one end user.

In a preferred embodiment, the dummy grant has a frequency extension covering the frequency interval between the subchannels corresponding to frequency f1 and frequency f2, which range was identified as a frequency range with bad channel quality.

Alternatively, the dummy grant may extend over a region smaller than low quality frequency range, the size and position of this region representing a compromise between throughput of subscriber station data and quality. For example, if the amount of data belonging to a burst and outside of the frequency range is higher than a predefined threshold, some additional data belonging to the same burst may be included inside the frequency range between f1 and f2 since the good quality of the data outside of the low quality frequency range may be appropriately used to perform error correction on a limited number of additional data inside the low quality frequency range.

According to the present invention, the bursts comprising user information are arranged to take into account the excluded zone between frequency f1 and f2. In particular, the time and frequency extension of grant #2 and grant #3 is limited compared to the prior art solution by the fact that a part of their prior art time and frequency extension would fall into the low quality frequency range f1-f2. Consequently, grant #2 ends at the last symbol of the subchannel before the subchannel corresponding to frequency f2 while grant #3 starts at the first symbol of the subchannel after the subchannel corresponding to frequency f1.

In a preferred embodiment of the present invention, the dummy burst is characterized in that its corresponding connection identifier does not correspond to any subscriber station registered under the coverage of the basis station the scheduling is performed for. Preferably, an UL-MAP management message sent by the base station defines the transmission opportunities (grants) for the different subscriber stations under the coverage of this base station. Each subscriber station known at the base station is identified by its connection identifier CID, so that UL-MAP management message comprised the CID associated with the position and size of the data to be transmitted by the subscriber station in the next uplink frame. In case of a dummy burst, a randomly chosen CID not belonging to the set of CIDs used at the base station is included in the UL-MAP message. Alternatively, the CID used for dummy bursts may be a predefined value agreed upon in the whole system.

Figure 4 shows an embodiment of a scheduler according to the present invention. The scheduler is adapted to be used in an OFDMA radio communication system and comprises means 41 for detecting a frequency range having a transmission quality below a predefined threshold, herein called low quality frequency range, means 42 for allocating bursts in said frame and means 43 for generating a dummy burst allocation not destined to any mobile subscriber station active in said radio communication network, the size and position of said dummy burst depending on the size and position of said low quality frequency range.

Mean 41 can be implemented as known in prior art. A method for determining the channel quality could consist in measure the quality of uplink transmission at a base station by calculating an error rate of the received data.

Means 42 implement the usual scheduling algorithm of the scheduler. Means 42 are informed by means 41 on the frequency range having a transmission quality below a predefined threshold so that means 42 can avoid to allocate grants in this low quality frequency range to subscriber stations.

In parallel, means 43 generates a dummy burst allocation not destined to any mobile subscriber station active under the coverage of any base station the scheduler is currently working for. The size and position of the dummy burst depends on the size and position of said low quality frequency range. For performing this, means 43 are informed by means 41 of the extension of the low quality frequency range.

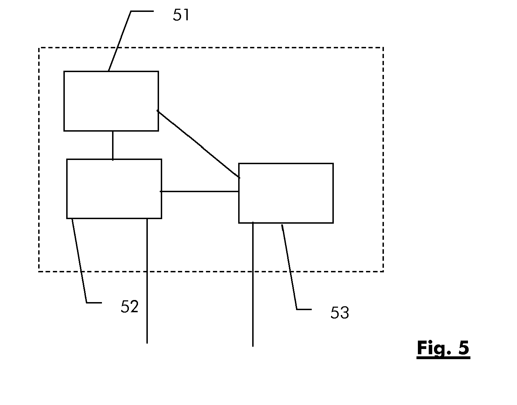

Figure 5 shows an embodiment of a base station according to the present invention. The base station according to the present invention could either comprises a scheduler as described in figure 4 or could be responsive to messages sent by a centralized scheduler outside of the base station.

In the first embodiment of the base station, the base station is adapted to be used in an OFDMA radio communication system and comprises means 51 for detecting a frequency range having a transmission quality below a predefined threshold, means 52 for allocating bursts in said frame and means 53 for generating a dummy burst allocation not destined to any mobile subscriber station, the size and position of said dummy burst depending on the size and position of said low quality frequency range.

Mean 51 can be implemented as known in prior art. A method for determining the channel quality could consist in measuring the quality of uplink transmission at a base station by calculating an error rate of the received data.

Means 52 implements the usual scheduling algorithm of the scheduler. Means 52 are informed by means 51 on the low quality frequency range so that means 52 can avoid to allocate grants in this frequency domains to subscriber stations.

In parallel, means 53 generate a dummy burst allocation not destined to any mobile subscriber station active under the coverage of any base station the scheduler is currently scheduling grants for. The size and position of said dummy burst depends on the size and position of said low quality frequency range. For performing this, means 53 are informed by means 51 of the frequency range showing bad transmission quality.

In a second embodiment of the base station, and especially if the base station is responsive to message send from an external scheduler, the base station comprises exclusively means 53 for generating a dummy burst allocation not destined to any mobile subscriber station active in said radio communication network, the size and position of said dummy burst depending on the size and position of said low quality frequency range. The base station will generate a UL-MAP message comprising the CID of the grants as well as a randomly selected CID not belonging to the set of CID it is managing.

## Claims

1. Method for allocating resources in a radio communication system comprising a plurality of subchannels in the frequency domain, said radio communication system supporting the transmission of frames on an air interface, said frames comprising a plurality of bursts, said frames having an extension in the frequency domain and an extension in the time domain, said method comprising the steps of:
- detecting a frequency range (f1, f2) having a transmission quality below a predefined threshold, herein called low quality frequency range;
- allocating bursts (grant #1, ..., grant #4) in said frame;
- generating a dummy burst allocation (dummy burst) not destined to any mobile subscriber station, the size and position of said dummy burst depending on the size and position of said low quality frequency range (f1, f2).

2. Method according to claim 1, wherein said dummy burst extends over the complete low quality frequency range.

3. Method according to claim 1, wherein said dummy burst extends over a region smaller than the complete low frequency range.

4. Method according to claim 1, wherein said bursts are mapped to a connection identifier identifying a mobile subscriber station, said connection identifier being allocated by the base station to the different mobile subscriber stations, said dummy burst being allocated to a connection identifier not belonging to the set of connection identifier of active mobile subscriber stations referenced at said base station.

5. Method according to claim 1; wherein said radio communication system is based on orthogonal frequency Division multiple access.

6. Scheduler adapted to be used in a radio communication system comprising a plurality of subchannels in the frequency domain, said radio communication system supporting the transmission of frames on an air interface, said frames comprising a plurality of bursts, said frames having an extension in the frequency domain and an extension in the time domain, said scheduler comprising:
- means (41) for detecting a frequency range having a transmission quality below a predefined threshold, herein called low quality frequency range;
- means (42) for allocating bursts in said frame;
- means (43) for generating a dummy burst allocation not destined to any mobile subscriber station, the size and position of said dummy burst depending on the size and position of said low quality frequency range.

7. Base station adapted to be used in a radio communication system comprising a plurality of subchannels in the frequency domain, said radio communication system supporting the transmission of frames on an air interface, said frames comprising a plurality of bursts, said frames having an extension in the frequency domain and an extension in the time domain, said scheduler comprising:
- means (51) for detecting a frequency range having a transmission quality below a predefined threshold, herein called low quality frequency range;
- means (52) for allocating bursts in said frame;
- means (53) for generating a dummy burst allocation not destined to any mobile subscriber station, the size and position of said dummy burst depending on the size and position of said low quality frequency range.
